(19) Europäisches Patentamt
European Patent Office
Office européen des brevets

(11) EP 2 368 146 B1

(12) # FASCICULE DE BREVET EUROPEEN

(45) Date de publication et mention de la délivrance du brevet:
**10.08.2016 Bulletin 2016/32**

(21) Numéro de dépôt: **09797105.5**

(22) Date de dépôt: **26.11.2009**

(51) Int Cl.:
***G02B 1/11*** (2015.01) ***G02B 1/04*** (2006.01)
***G02C 7/04*** (2006.01)

(86) Numéro de dépôt international:
**PCT/FR2009/052318**

(87) Numéro de publication internationale:
**WO 2010/061145 (03.06.2010 Gazette 2010/22)**

(54) **PROCEDE DE FABRICATION D'UN ARTICLE D'OPTIQUE A PROPRIETES ANTIREFLETS**

VERFAHREN ZUR HERSTELLUNG EINES OPTISCHEN ARTIKELS MIT ANTIBLENDEIGENSCHAFTEN

METHOD FOR MANUFACTURING AN OPTICAL ARTICLE WITH ANTI-GLARE PROPERTIES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.11.2008 FR 0858066**

(43) Date de publication de la demande:
**28.09.2011 Bulletin 2011/39**

(73) Titulaire: **Essilor International (Compagnie Générale d'Optique)**
**94220 Charenton-le-Pont (FR)**

(72) Inventeurs:
- **CRETIER, Annette**
  **F-94220 Charenton Le Pont (FR)**
- **KELLER, Gerhard**
  **F-94220 Charenton Le Pont (FR)**
- **VANEECKHOUTTE, Philippe**
  **94220 Charenton Le Pont (FR)**

(74) Mandataire: **Orsini, Fabienne et al**
**Cabinet Harle et Phelip**
**14-16 Rue Ballu**
**75009 Paris (FR)**

(56) Documents cités:
**WO-A-01/19533**
**WO-A-03/056366**
**FR-A- 2 707 763**
**FR-A- 2 858 420**
**JP-A- 2005 234 311**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 368 146 B1

## Description

La présente invention concerne un procédé de préparation d'un article d'optique, par exemple une lentille ophtalmique, comprenant un empilement antireflet au moins bicouche sur un substrat transparent en verre organique ou minéral, éventuellement revêtu et l'article d'optique à propriété antireflets ainsi obtenu.

D'une manière générale, les revêtements antireflets (désignés aussi par AR ou antireflet dans la présente demande) sont généralement déposés, non pas directement sur le substrat transparent, par exemple une lentille, mais sur des revêtements anti-abrasion préalablement déposés sur le substrat nu ou revêtu d'un primaire d'adhésion et/ou antichoc.

De façon connue, les couches des revêtements antireflets sont le plus souvent appliquées par dépôt sous vide, selon l'une des techniques suivantes : par évaporation, éventuellement assistée par faisceau ionique, par pulvérisation par faisceau d'ions, par pulvérisation cathodique, ou encore par dépôt chimique en phase vapeur assisté par plasma.

Il est également connu dans l'état de l'art de préparer des revêtements antireflets par voie sol/gel.

Ces revêtements antireflets peuvent être déposés par centrifugation (spin coating) ou par trempé (dip coating).

De tels revêtements antireflets sont décrits par exemple dans les brevets US 5104692, US4590117.

Aucune des techniques décrites dans ces brevets n'a conduit à un produit largement accepté dans le domaine de l'optique ophtalmique.

L'un des inconvénients des techniques décrites dans ces brevets est la difficulté d'obtenir un bon contrôle des épaisseurs, et des antireflets cosmétiquement acceptables, c'est-à-dire exempt de défauts optiques perceptibles visuellement, en particulier lorsque ceux-ci sont déposés au trempé.

Les propriétés optiques ou mécaniques de ces antireflets déposés par voie liquide, notamment par voie sol/gel, sont souvent inférieures aux antireflets obtenus par voie classique (évaporation).

Ces différents inconvénients ont pour conséquence le faible développement des antireflets déposés par voie sol/gel dans le domaine de l'optique ophtalmique.

Ainsi, les antireflets commerciaux obtenus par voie sol/gel dans le domaine de l'optique ophtalmique sont peu nombreux et déposés par centrifugation, procédé plus coûteux.

La demande de brevet WO2006095469 décrit des monocouches AR obtenus à partir de particules de silice creuses. Il serait souhaitable d'améliorer les propriétés de résistance à l'abrasion et à la rayure, à l'humidité ou à la combinaison de tels traitements ainsi que les propriétés optiques de ces AR.

Dans un domaine voisin, il a été proposé dans la demande de brevet WO 03/056366, au nom du déposant, de résoudre le problème des franges d'interférence apparaissant à l'interface entre un substrat et une couche polymère en interposant entre le substrat et la couche de nature polymère une couche quart d'onde ($\lambda/4$) initialement poreuse à base de particules d'oxydes minéraux colloïdaux, dont la porosité a été au moins en partie comblée, généralement totalement ou quasi-totalement comblée, par le matériau constituant la couche polymérique ou le matériau constituant le substrat, lorsque celui-ci est de nature polymère. Cette construction diminue efficacement l'intensité des franges d'interférences.

Dans le mode de réalisation préférentiel de l'invention dans la demande de brevet WO 03/056366, la couche quart d'onde est située, sur une de ses faces, en contact direct avec le substrat, et sur l'autre face, en contact direct avec un revêtement de primaire antichoc, lui-même revêtu d'un revêtement anti-abrasion.

Dans cet empilement, les propriétés mécaniques de surface de la couche quart d'onde ne jouent pas un rôle essentiel, dans la mesure où cette couche est une couche intermédiaire dont la surface n'est pas exposée directement aux agressions physiques extérieures.

La couche quart d'onde décrite dans cette demande ne constitue pas un empilement antireflet.

Par définition, un revêtement antireflet désigne un empilement antireflet diminuant la réflexion à l'interface air /lentille, situé sur la face externe de la lentille, la plus éloignée du substrat.

Le revêtement antireflet est en contact avec l'air, ou séparé de l'air par une fine couche additionnelle et il doit résister aux agressions physiques extérieures.

Ainsi, l'empilement antireflet peut être revêtu, à sa surface externe, d'une fine couche additionnelle, typiquement inférieure à 50 nm, mieux inférieure à 10 nm, et mieux encore inférieure à 5 nm, modifiant ses propriétés mécaniques de surface, telle qu'une couche hydrophobe et/ou oléophobe bien connue dans l'état de l'art et qui a pour effet d'améliorer les propriétés antisalissure.

Dans ce cas, c'est cette fine couche externe qui constitue l'interface lentille/air. Une telle couche ne modifie pas ou très peu les propriétés optiques de l'empilement AR.

Des couches temporaires peuvent également être déposées à la surface de la couche anti-salissures pour faciliter la mise en oeuvre d'opérations de débordage et sont éliminées après cette étape de débordage.

Le document WO1/19533 A1 divulgue un revêtement anti reflet. Le document JP 2005234311 divulgue l'emploi d'un composé époxyalcoxysilane dans un revêtement anti reflet.

Un premier objectif de l'invention est de fournir un procédé d'obtention d'un revêtement antireflet dont l'empilement est obtenu par voie liquide, c'est-à-dire par dépôt successifs de solutions, en particulier de type sol/gel, qui puisse être mis aisément en oeuvre par des dépôts en voie liquide classiques, en particulier par trempé (dip coating), en particulier sans nécessiter obligatoirement une étape de chauffage des solutions après leur dépôt et avant dépôt de la solution suivante.

Un second objectif de l'invention est de fournir des revêtements antireflets essentiellement obtenus par voie liquide dont les propriétés optiques et/ou mécaniques sont améliorées par rapport aux antireflets de l'état de l'art.

Un autre objectif de l'invention est de fournir des revêtements antireflets, exempts de défauts d'aspect.

Selon l'invention, on réalise le revêtement antireflet par dépôt d'un empilement d'une ou plusieurs couches présentant une porosité, et on applique à la surface de cet empilement une couche supérieure d'une composition durcissable dont une partie au moins va diffuser à l'intérieur de la ou des couches poreuses et remplir la porosité.

En ajustant l'épaisseur de la couche de composition durcissable résiduelle, après diffusion, au sein de ces couches de cette même composition durcissable, on peut former un revêtement antireflet, par exemple de type bicouche haut indice de réfraction/bas indice de réfraction (HI/BI), avec des épaisseurs optiques respectives de $\lambda/2$- $\lambda/4$ ou $\lambda/2$ -$3\lambda/4$.

Les définitions des couches HI et BI sont données ci-après en liaison avec la description des couches particulières, mais sont généralisables à toute couche HI ou BI de l'antireflet.

Par conséquent, l'invention est un procédé de fabrication d'un article d'optique à propriétés antireflets, comprenant :

a) la formation sur au moins une surface principale d'un support, par application d'un sol d'au moins un oxyde minéral colloïdal d'indice de réfraction supérieur ou égal à 1,80 et éventuellement un liant, d'une première couche inférieure d'au moins un oxyde minéral colloïdal dont l'indice de réfraction est supérieur ou égal à 1,80 et éventuellement de liant, ayant une porosité initiale;

b) optionnellement, la formation sur la première couche inférieure par application d'un sol d'au moins un oxyde minéral colloïdal d'indice de réfraction inférieur à 1,65 et éventuellement un liant, d'une seconde couche inférieure de porosité initiale au moins égale, de préférence supérieure à la porosité initiale de ladite première couche ;

c) l'application sur la ou les couches inférieures d'une composition de couche supérieure d'un matériau polymérique optiquement transparent dont l'indice de réfraction, est inférieur ou égal à 1,50 ;

d) le comblement de la porosité de la ou des couches inférieures par pénétration dans la ou les couches inférieures d'au moins une partie du matériau de la composition de couche supérieure formée à l'étape (c) et, éventuellement, en partie par le liant, et la formation d'une couche supérieure durcie dont l'épaisseur est déterminée de sorte que la couche supérieure et la ou les couches inférieures, après comblement de la ou leur porosité initiale, constituent un antireflet bicouche, dans le domaine allant de 400 à 700 nm, de préférence de 450 à 650 nm.

Par « antireflet », ou « empilement antireflet », on entend un revêtement dont la valeur de $R_v$ par face est inférieure ou égale à 2,5 %. Le "facteur moyen de réflexion lumineuse," noté $R_v$, est tel que défini dans la norme ISO 13666:1998, et mesuré conformément à la norme ISO 8980-4, c'est-à-dire qu'il s'agit de la moyenne pondérée de la réflexion spectrale sur l'ensemble du spectre visible entre 380 et 780 nm.

Les antireflets obtenus selon le procédé de l'invention permettent d'atteindre des valeurs de $R_v$ inférieures à 2 % par face, et mieux inférieures ou égales à 1,5 % par face, et mieux encore inférieures ou égales à 1 % par face.

Préférentiellement, l'antireflet bicouche forme un empilement d'épaisseur optique $\lambda/2$-$\lambda/4$ ou $\lambda/2$-$3\lambda/4$ pour une longueur d'onde $\lambda$ de 500 à 600 nm.

De préférence, ladite première couche inférieure a une épaisseur physique de 100 à 160 nm après comblement de sa porosité initiale.

Dans un premier mode de réalisation de l'invention, le procédé ne comprend pas d'étape b) de formation d'une deuxième couche inférieure et l'antireflet bicouche est formé de ladite première couche inférieure, après comblement de sa porosité initiale, et de la couche supérieure.

Selon que la couche supérieure fait partie d'un antireflet de type $\lambda/2$-$\lambda/4$ ou $\lambda/2$-$3\lambda/4$, la couche supérieure a une épaisseur physique dans des gammes préférentielles de 70 à 90 nm ou de 250 à 290 nm.

Dans un second mode de réalisation de l'invention, l'étape b) du procédé est réalisée, c'est-à-dire que l'on dépose une seconde couche inférieure. Ensuite on dépose la composition de couche supérieure et on fait pénétrer la totalité du matériau de la composition de couche supérieure dans les couches inférieures, de façon à réaliser leur comblement. Dans ce mode de réalisation, le revêtement antireflet bicouche est formé par lesdites première et seconde couches après comblement de leur porosité.

Dans ce mode de réalisation de l'invention, l'expression « faire pénétrer la totalité du matériau de la composition de couche supérieure » signifie que le matériau de la couche supérieure, après pénétration et comblement de la porosité des couches inférieures, ne possède plus d'épaisseur résiduelle ou bien qu'il forme une très mince couche de quelques nm, sans engendrer de modifications significatives des propriétés optiques de l'empilement AR ainsi réalisé.

Outre les antireflets bicouches décrits ci-dessus, l'homme du métier peut envisager d'autres gammes d'épaisseurs tels que des AR bicouche avec une couche inférieure HI de 10 à 30 nm et une couche supérieure BI de 80 à 120 nm.

Les compositions de couches inférieures vont maintenant être décrites plus en détail.

Dans la présente demande et sauf mention contraire, les indices de réfraction sont déterminés à 25 °C à la longueur d'onde de 589 nm.

La première composition de couche inférieure ayant une porosité initiale est obtenue par trempage du substrat dans un sol d'au moins un oxyde minéral colloïdal d'indice de réfraction supérieur ou égal à 1,80 et éventuellement un liant, ou par centrifugation dudit sol, de préférence par trempage.

Dans le cas du dépôt par trempage, l'épaisseur déposée est fonction de la teneur en matière sèche du sol, de la taille des particules et de la vitesse de démouillage (Loi de Landau-Levich). Ainsi, connaissant la composition du sol, la taille des particules, l'indice de réfraction du matériau engendré par la composition de couche supérieure qui va diffuser au sein de ladite couche inférieure et venir combler sa porosité, et compte tenu du fait que ce comblement ne modifie sensiblement pas l'épaisseur de la couche inférieure déposée, on peut déterminer l'épaisseur requise pour la couche d'oxyde minéral colloïdal et la vitesse de démouillage convenant pour l'obtention de l'épaisseur voulue.

Après séchage de la couche déposée, on obtient une couche d'oxyde minéral colloïdal poreuse d'épaisseur voulue.

La porosité de la couche est un critère important et doit être de préférence d'au moins 40 % en volume, mieux d'au moins 50 % en l'absence de liant et de préférence d'au moins 25 %, mieux d'au moins 30 % en volume, en présence de liant.

Le séchage de la couche après dépôt peut être effectué à une température variant de 20 à 130° C, préférentiellement 20 °C-120 °C, pendant une durée généralement inférieure à 15 minutes..

Préférentiellement, le séchage est effectué à température ambiante (20-25 °C). La durée préférentielle du traitement à température ambiante est de l'ordre de 3 à 5 minutes.

La porosité des couches peut être calculée à partir des indices de réfraction des couches mesurées par ellipsométrie.

<u>Dans le cas d'une couche ne contenant pas de liant</u>

La porosité de la couche d'oxyde minéral colloïdal poreuse est p= $V_p$ / / ($V_c$ + $V_p$) où $V_p$ est le volume des pores contenus dans la couche, et $V_c$ est le volume occupé par l'oxyde minéral dans la couche.

La porosité p de la couche est ici égale à la porosité en l'absence de liant.

On accède à la valeur de la porosité p à partir des indices de réfraction :

- n (mesuré par ellipsométrie) qui est l'indice de réfraction de la couche minérale poreuse,
- $n_c$ qui est l'indice de réfraction moyen des particules d'oxyde minéral (éventuellement mixtes si plusieurs oxydes sont utilisés) et de la relation : $n^2=p+n_c^2(1-p)$ où p est la fraction volumique en pore, en supposant les pores remplis d'air et 1-p la fraction volumique d'oxyde minéral.

<u>Dans le cas d'une couche contenant un liant</u>

La porosité p de la couche est calculée à partir des relations suivantes :

$$(1) \qquad n^2=p+x_c\, n_c^2+ x_l\, n_l^2$$

où n est l'indice de réfraction de la couche d'oxyde minéral poreux,
p, porosité de la couche = $V_p/V_{total}$,
$x_c$ représente la fraction volumique d'oxyde minéral dans la couche

$$x_c = V_c,/ V_{total},$$

$x_l$ représente la fraction volumique de liant dans la couche

$$x_l = V_l / V_{total}$$

$V_p$, $V_c$, $V_l$, $V_{total}$ représentent respectivement les volumes occupés par les pores (air), l'oxyde minéral, le liant et par la

totalité de la couche, $n_c$ est l'indice de réfraction moyen des particules d'oxyde minéral, $n_l$ est l'indice de réfraction du liant,

$$(2) \qquad p + x_l + x_c = 1$$

$$(3) \qquad x_l/x_c = (m_l/m_c).(d_c/d_l)$$

$d_c$ = densité de l'oxyde minéral,
$d_l$ = densité du liant,
$m_l$ = masse sèche du liant dans la couche,
$m_c$= masse sèche d'oxyde minéral dans la couche.

La porosité en l'absence de liant est, par définition, $p'=p+x_l$, c'est-à-dire la porosité que présenterait la couche si le volume de liant était occupé par de l'air.

On obtient les valeurs de p et p' par mesure de n, par ellipsométrie, les indices $n_c$ et $n_l$ étant connus par ailleurs et le ratio $m_l/m_c$ étant fixé expérimentalement.

Les différents indices de réfraction sont déterminés à 25°C à la longueur d'onde de 589 nm $(n_D^{25})$.

Préférentiellement, la première couche inférieure possède, après comblement de sa porosité initiale, un indice de réfraction élevé d'au moins 1,70, de préférence d'au moins 1,75 et mieux de 1,75 à 1,85.

Lorsqu'une seconde couche inférieure est déposée et sa porosité initiale comblée, celle-ci peut présenter typiquement une épaisseur physique de 70 à 90 nm ou de 250 à 290 nm.

La taille des particules du ou des oxydes minéraux colloïdaux dans la ou les couche(s) inférieure(s) est de 5 à 80 nm, de préférence de 10 à 30 nm.

En particulier, l'oxyde minéral peut être constitué d'un mélange de particules de petites tailles, c'est à dire de 10 à 15 nm et de particules de grandes tailles, c'est à dire de 30 à 80 nm.

Le ou les oxyde(s) minéral(ux) colloïdal(aux) de la première couche inférieure est(sont) de préférence choisi(s) parmi $TiO_2$, $ZrO_2$, $SnO_2$, $Sb_2O_3$, $Y_2O_1$, $Ta_2O_5$ et leurs mélanges.

Dans un mode de réalisation, les particules dispersées ont une structure composite à base de $TiO_2$, $SnO_2$, $ZrO_2$ et $SiO_2$. Dans une telle structure, le titane $TiO_2$ est de préférence sous forme rutile, la phase rutile du titane étant moins photo-active que la phase anatase.

On peut cependant utiliser comme nanoparticules pour la couche haut indice, d'autres oxydes ou chalcogénures choisis dans le groupe suivant : ZnO, $IrO_2$, $WO_3$, $Fe_2O_3$, $FeTiO_3$, $BaTi_4O_9$, $SrTiO_3$, $ZrTiO_4$, $MoO_3$, $CO_3O_4$, $SnO_2$, oxyde ternaire à base de bismuth, $RuO_2$, $Sb_2O_4$, $BaTi_4O_9$, MgO, $CaTiO_3$, $V_2O_5$, $Mn_2O_3$, $CeO_2$, $Nb_2O_5$, $RuS_2$.

Des exemples de colloïdes particulièrement recommandés sont le colloïde 1120 Z 9 RS-7 A15 (particules de $TiO_2$ composite d'indice de réfraction de 2,48) ou le colloïde 1120 Z (8RX7-A15) (Particules de $TiO_2$ composite d'indice de réfraction de 2,34). Ces deux colloïdes peuvent être obtenus auprès de la société CCIC.

Le liant est généralement un matériau polymère qui ne nuit pas aux propriétés optiques de la ou des couche(s) inférieures et qui accroît la cohésion et l'adhérence des particules d'oxydes minéraux à la surface du substrat.

Les liants préférés sont les latex de polyuréthane et les latex (méth) acryliques, tout particulièrement les latex de polyuréthane.

De préférence, le liant est un latex de polyuréthane.

Le liant, lorsqu'il est présent, représente typiquement de 0,1 à 10 % en poids, mieux de 0,1 à 5% en poids par rapport au poids total d'oxyde minéral sec de la ou des couches inférieures.

De préférence, aucune des première et deuxième couches inférieures ne renferme de liant.

La seconde couche inférieure, lorsqu'elle est présente, comprend au moins un oxyde minéral colloïdal d'indice de réfraction inférieur à 1,65 et possède une porosité initiale au moins égale, de préférence supérieure à la porosité initiale de ladite première couche ;

Lorsque la porosité de la seconde couche inférieure est plus élevée que celle de la première couche inférieure, la conséquence est qu'une plus grande quantité de composition de couche supérieure que dans la première couche inférieure pénétrera dans la seconde couche inférieure pour assurer son comblement.

Comme l'indice de réfraction de la couche supérieure est faible, le comblement des porosités différentielles des deux couches inférieures engendre de ce seul fait une différence d'indice entre ces deux couches, la deuxième couche inférieure étant d'indice plus faible que celle de la première couche inférieure.

La deuxième couche inférieure, lorsqu'elle est présente, comprend de préférence au moins un oxyde minéral colloïdal de bas indice $(n_D^{25} \leq 1,50)$, de préférence de la silice colloïdale et le cas échéant, une proportion mineure

d'au moins un oxyde minéral colloïdal de haut indice $(n_D^{25} > 1,54)$. L'oxyde minéral colloïdal de haut indice est en général choisi parmi ceux cités pour la réalisation de la première couche inférieure.

Les silices colloïdales préférées sont les silices préparées par le procédé Stöber. Le procédé Stöber est un procédé simple et bien connu qui consiste en une hydrolyse et condensation du tétra silicate d'éthyle (Si $(OC_2H_5)_4$ ou TEOS) dans l'éthanol catalysée par de l'ammoniac. Le procédé permet d'obtenir une silice directement dans l'éthanol, une population de particules quasi monodispersée, une taille de particules réglable et une surface de particule (SiO-NH4+).

Il est possible, afin d'abaisser l'indice de réfraction de la deuxième couche inférieure, d'utiliser des particules de silice creuses, telles que celles décrites dans les demandes de brevet WO2006095469, JP2001-233611.

Toutefois, il est préférable, pour des raisons de propriétés mécaniques, d'utiliser des particules de silice classiques.

De préférence, le rapport pondéral oxyde minéral colloïdal bas indice/oxyde minéral haut indice de la deuxième couche inférieure varie de 0 à 10%, de préférence 0 à 5%.

Mieux, la deuxième couche inférieure ne renferme pas d'oxyde minéral colloïdal de haut indice de réfraction.

Préférentiellement, la composition de couche supérieure, à bas indice de réfraction (BI) peut être constituée de toute composition durcissable, préférentiellement thermiquement, engendrant un matériau à bas indice de réfraction, c'est-à-dire possédant un indice de réfraction de 1,38 à 1,53, préférentiellement de 1,40 à 1,50, mieux de 1,45 à 1,49 et capable de pénétrer dans la ou les couche(s) inférieure(s) préalablement déposée(s) et combler leur porosité.

Dans un mode de réalisation préférentiel, la composition de couche supérieure (BI) est un hydrolysat d'au moins un silane, de préférence d'au moins un époxyalcoxysilane.

Les époxyalcoxysilanes préférés comportent un groupement époxy et trois groupements alcoxy, ces derniers étant directement liés à l'atome de silicium. Les époxyalcoxysilanes particulièrement préférés répondent à la formule (I) :

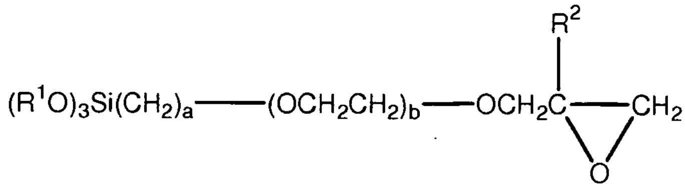

(I)

dans laquelle :

- $R^1$ est un groupement alkyle de 1 à 6 atomes de carbone, préférentiellement un groupement méthyle ou éthyle,
- $R^2$ est un groupement méthyle ou un atome d'hydrogène,
- a est un nombre entier de 1 à 6,
- b représente 0,1 ou 2.

Des exemples de tels époxysilanes sont le γ-glycidoxypropyl-triéthoxysilane ou le γ-glycidoxypropyltriméthoxysilane. glycidoxyméthyl-triméthoxysilane, glycidoxyméthyltriéthoxysilane, glycidoxyméthyl-tripropoxysilane, glycidoxyméthyl-tributoxysilane, beta-glycidoxyéthyltriméthoxysilane, beta-glycidoxyéthyltriéthoxysilane, beta-glycidoxyéthyl-tripropoxysilane, beta-glycidoxyéthyl-tributoxysilane, beta-glycidoxyéthyltriméthoxysilane, alpha-glycidoxyéthyl-triéthoxysilane, alpha-glycidoxyéthyl-tripropoxysilane, alpha-glycidoxyéthyltributoxysilane, gamma-glycidoxypropyl-triméthoxysilane, gamma-glycidoxypropyl-triéthoxysilane, gamma-glycidoxypropyl-tripropoxysilane, gamma-glycidoxypropyltributoxysilane, beta-glycidoxypropyl-triméthoxysilane, beta-glycidoxypropyl-triéthoxysilane, beta-glycidoxypropyl-tripropoxysilane, beta-glycidoxypropyltributoxysilane, alpha-glycidoxypropyl-triméthoxysilane, alpha-glycidoxypropyl-triéthoxysilane, alpha - glycidoxypropyl-tripropoxysilane, alpha-glycidoxypropyltributoxysilane, gamma-glycidoxybutyl-triméthoxysilane, delta-glycidoxybutyl-triéthoxysilane, delta-glycidoxybutyl-tripropoxysilane, delta-glycidoxybutyl-tributoxysilane, delta-glycidoxybutyl-triméthoxysilane, gamma-glycidoxybutyl-triéthoxysilane, gamma-glycidoxybutyl-tripropoxysilane, gamma-propoxybutyl-tributoxysilane, delta-glycidoxybutyl-triméthoxysilane, delta-glycidoxybutyl-triéthoxysilane, delta-glycidoxybutyl-tripropoxysilane, alpha-glycidoxybutyl-triméthoxysilane, alpha-glycidoxybutyl-triéthoxysilane, alpha-glycidoxybutyl-tripropoxysilane, alpha-glycidoxybutyl-tributoxysilane,

On utilise préférentiellement le γ-glycidoxypropyltriméthoxysilane.

D'autres époxysilanes préférés sont des époxydialkoxysilane tel que γ-glycidoxypropylméthyldiméthoxysilane, γ-glycidoxypropylméthyldiéthoxysilane, γ-glycidoxypropyl-méthyl-diisopropénoxysilane, et γ-glycidoxyéthoxypropylméthyldiméthoxysilane;

L'hydrolysat de silanes est préparé de façon connue en soi.

La composition peut en outre comprendre un tri- ou dialcoxysilane ne comportant pas de groupe époxy. ou un composé précurseur de formule $Si(W)_4$ dans laquelle les groupes W sont des groupements hydrolysables, identiques ou différents, et à la condition que les groupements W ne représentent pas tous en même temps un atome d'hydrogène.

Ces groupements hydrolysables W représentent un groupe tel que OR, Cl, H, R étant un alkyle, de préférence un alkyle en $C_1$-$C_6$ tel que $CH_3$, $C_2H_5$, $C_3H_7$.

Les techniques exposées dans le brevet US 4 211 823 peuvent être utilisées.

La composition durcissable de la couche supérieure bas indice (BI) peut également comprendre un fluorosilane précurseur. Celui-ci permet d'obtenir un bas indice de réfraction de la matrice du matériau de la couche supérieure et de la deuxième couche inférieure, lorsque celle-ci est présente, et ainsi d'obtenir un antireflet plus performant. Toutefois, le fluorosilane précurseur est préférentiellement utilisé dans des quantités faibles dans la composition durcissable de la couche supérieure car plus l'indice de réfraction de celle-ci est bas, plus il contribue à diminuer l'indice de réfraction de la couche inférieure (ou de la première couche inférieure lorsque deux couches inférieures sont utilisés), une fois celle-ci comblée, alors que pour une bonne efficacité de l'AR, il convient que l'indice de réfraction de la couche inférieure soit élevé. Aussi, plus l'on opère à un taux élevé de fluorosilanes précurseurs dans la composition de couche supérieure, plus il convient que la couche inférieure de l'empilement (ou la première couche inférieure de l'empilement) présente, avant comblement de sa porosité, un indice de réfraction élevé. De préférence, le fluorosilane précurseur est présent dans une proportion en poids ne dépassant pas 20% et mieux ne dépassant pas 10 % du poids total des silanes présents dans ladite composition de couche supérieure.

Comme indiqué précédemment, le fluorosilane précurseur comprend au moins deux groupes hydrolysables par molécule.

Les groupements hydrolysables (représentés par la lettre X dans la suite de la description) du fluorosilane précurseur sont directement liés à l'atome de silicium.

Plus précisément, parmi les fluorosilanes précurseurs préférés, on peut citer les fluorosilanes de formules :

1.

$$Rf\text{-}SiR'_aX_{3-a}$$

où Rf est un groupe organique fluoré en $C_4$-$C_{20}$, R' est un groupe hydrocarboné monovalent en $C_1$-$C_6$, X est un groupe hydrolysable et a est un entier de 0 à 2 ; et

2.

$$CF_3CH_2CH_2\text{-}SiR'_aX_{3-a}$$

où R', X et a sont définis comme préalablement.

De préférence, Rf est un groupe polyfluoroalkyle de formule $C_nF_{2n+1}$-$Y_y$ ou $CF_3CF_2CF_2$ $O(CF(CF_3)CF_2O)_j$ $CF(CF_3)Y_y$, Y représente $(CH_2)_m$, $CH_2O$, NR", $CO_2$, CONR", S, $SO_3$ et $SO_2NR$" ; R" est H ou un groupe alkyle ou $C_1$-$C_8$, n est un entier de 2 à 20, y est 1 ou 2, j est un entier de 1 à 50, de préférence 1 à 20, et m est un entier de 1 à 3.

Les fluorosilanes précurseurs sont préférentiellement des polyfluoroéthers et mieux des poly(perfluoroéthers). Ces fluorosilanes sont bien connus et sont décrits entre autres dans les brevets US-5,081,192 ; US-5,763,061, US-6,183,872 ; US-5,739,639 ; US-5,922,787 ; US-6,337,235 ; US-6,277,485 et EP-933 377.

Une autre classe de fluorosilanes préférés sont ceux contenant des groupements fluoropolyethers décrits dans US-6,277,485.

Ces fluorosilanes répondent à la formule générale :

$$Rf - \left[ R^1 - SiY_{3-x}R^2X \right]_y$$

où Rf est un groupe perfluoropolyéther monovalent ou divalent ; $R^1$ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; $R^2$ est un groupe alkyle inférieur (c'est-à-dire un groupe alkyle $C_1$-$C_4$) ; Y est un halogènure, un groupe alcoxy inférieur (c'est-à-dire un groupe alcoxy en $C_1$-$C_4$, de préférence méthoxy ou éthoxy), ou un groupe acyloxy inférieur (c'est-à-dire $-OC(O)R^3$ où $R^3$ est un groupe alkyle en $C_1$-$C_4$) ; x est O ou 1 ; et y est 1 (Rf est monovalent) ou 2 (Rf est divalent).

Les composés appropriés ont en général une masse molaire moyenne en nombre d'au moins 1000.

De préférence, Y est un groupe alcoxy et Rf est un groupe perfluoropolyéther.

D'autres fluorosilanes recommandés sont ceux de formule :

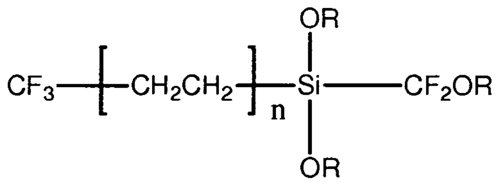

où n = 5, 7, 9 ou 11 et R est un radical alkyle, de préférence en $C_1$-$C_6$ tel que $-CH_3$,$-C_2H_5$ et $-C_3H_7$ ;

$CF_3CH_2CH_2SiCl_3$ ;

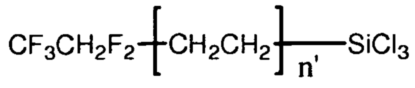

; et

$CF_3CH_2F_2CH_2CH_2$—$SiRCl_2$ ,

où n'= 7 ou 9 et R est tel que défini ci-dessus.

Des fluorosilanes également recommandés sont des fluoropolymères à groupements organiques décrits dans le brevet US 6,183,872.

Des fluoropolymères à groupements organiques porteurs de groupes Si sont représentés par la formule générale suivante et présentent un poids moléculaire de $5.10^2$ à $1.10^5$:

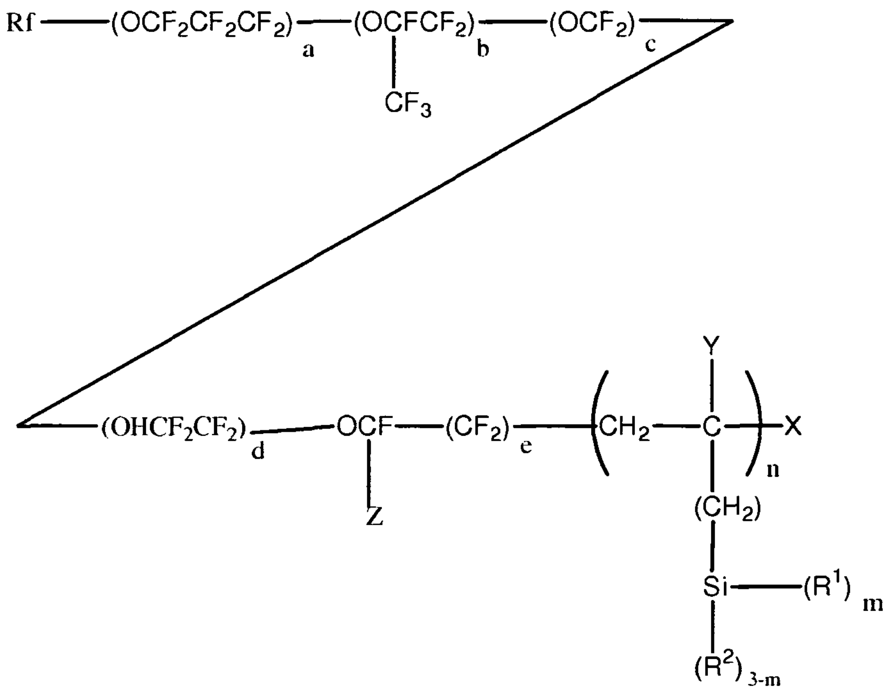

dans laquelle Rf représente un groupement perfluoroalkyle ; Z représente un groupement fluoro ou trifluorométhyle ; a, b, c, d et e représentent chacun indépendamment l'un de l'autre 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupement alkyle comprenant de 1 à 4 atomes de carbone ; X représente un atome d'hydrogène, de brome ou d'iode ; $R^1$ représente un groupement hydroxy ou un groupement hydrolysable ; $R^2$ représente un atome d'hydrogène ou un groupement hydrocarboné monovalent ; l représente 0, 1 ou 2 ; m représente 1, 2 ou 3 ; et n représente un entier au moins égal à 1, préférentiellement au moins égal à 2.

Un fluorosilane recommandé est commercialisé sous la dénomination Optool DSX®.

On utilisera de préférence le tridécafluoro-1,1,2,2-tétrahydroctyl-1-triéthoxysilane ($CF_3(CF_2)_5CH_2CH_2Si(OC_2H_5)_3$).

Lorsque la composition renferme un fluorosilane précurseur, l'antireflet obtenu peut présenter des propriétés antisalissures, sans qu'il soit nécessaire de déposer ultérieurement une couche hydrophobe et/ou oléophobe.

La composition de couche supérieure peut comprendre des colloïdes dont l'indice de réfraction doit rester faible, typiquement inférieur à 1,52, mieux inférieur à 1,50. Typiquement le colloïde utilisé est la silice colloïdale.

La teneur en matières solides de silice colloïdale peut varier généralement de 0 à 50 % en poids du poids d'extrait sec théorique de la composition de couche supérieure.

L'Extrait sec théorique est calculé comme décrit dans le brevet EP614957.

Si la taille des particules de silice colloïdale est faible, ces particules peuvent pénétrer au sein de la ou des couches inférieure(s) de nature poreuse.

Si la taille des particules est supérieure à la taille des pores, on peut penser que les colloïdes resteront en surface de la ou des couche(s) inférieure(s) et seul le matériau durcissable de nature non colloïdale pénétrera dans le volume poreux.

La composition de couche supérieure comprend généralement un catalyseur de durcissement.

Comme exemples de catalyseurs de durcissement de la composition de couche supérieure, on peut notamment citer les composés de l'aluminium, et en particulier les composés de l'aluminium choisi parmi :

- les chélates d'aluminium, et
- les composés de formules (II) ou (III) détaillées dessous :

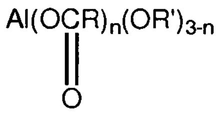

(II)

$$(R'O)_{3-n}Al(OSiR'_3)_n \qquad (III)$$

dans lesquelles :

R et R' sont des groupements alkyles à chaîne linéaire ou ramifiée de 1 à 10 atomes de carbone,
R'' est un groupement alkyle à chaîne linéaire ou ramifiée de 1 à 10 atomes de carbone, un groupement phényle, un groupe

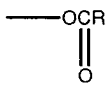

où R a la signification indiquée ci-dessus, et n est un nombre entier de 1 à 3.

Comme on le sait, un chélate d'aluminium est un composé formé en faisant réagir un alcoolate ou un acylate d'aluminium avec des agents séquestrants exempts d'azote et de soufre, contenant de l'oxygène comme atome de coordination.

Le chélate d'aluminium est de préférence choisi parmi les composés de formule (IV) :

$$AlX_vY_{3-v} \qquad (IV)$$

dans laquelle :

X est un groupement OL où L est un groupement alkyle de 1 à 10 atomes de carbone,
Y est au moins un coordinat produit à partir d'un composé de formule (1) ou (2) :

(1) $M^1\ CO\ CH_2\ COM^2$

(2) $M^3\ CO\ CH_2\ COOM^4$

dans lesquelles
$M^1$, $M^2$, $M^3$ et $M^4$ sont des groupements alkyles de 1 à 10 atomes de carbone,
et v prend les valeurs 0,1 ou 2.

Comme exemples de composés de formule (IV), on peut citer l'acétylacétonate d'aluminium, l'éthylacétoacétate bisacétylacétonate d'aluminium, le biséthylacétoacétate acétylacétonate d'aluminium, le di-n-butoxyde monoéthylacétoacétate d'aluminium et le diipropoxyde mono-méthylacétoacétate d'aluminium.

Comme composés de formule (III) ou (IV), on choisit préférentiellement ceux pour lesquels R' est un groupement isopropyle ou éthyle, et R et R" sont des groupements méthyle.

De façon particulièrement avantageuse, on utilisera de préférence comme catalyseur de durcissement de la composition de couche supérieure l'acétyle-acétonate d'aluminium, dans une proportion de 0,1 à 5 % en poids du poids total de la composition.

D'autres catalyseurs de durcissement peuvent être utilisés, comme les sels d'amine, par exemple les catalyseurs commercialisés par Air Products sous les dénominations POLYCAT SA-1/10®, DABCO 8154® et DABCODA-20®, les sels d'étain tels que le produit commercialisé par Acima sous la dénomination METATIN 713®

La composition de couche supérieure peut également comporter un ou plusieurs tensioactifs, en particulier des tensioactifs fluorés ou fluorosiliconés, généralement à raison de 0,001 à 1% en poids, de préférence 0,01 à 1% en poids, par rapport au poids total de la composition. Parmi les tensioactifs préférés, on peut citer le FLUORAD® FC430 commercialisé par 3M, le EFKA 3034® commercialisé par EFKA, le BYK-306® commercialisé par BYK et le Baysilone OL31®commercialisé par BORCHERS.

La ou les compositions de couche inférieure peuvent également contenir des tensioactifs, comme ceux cités ci-dessus, mais de préférence, elles n'en comportent pas.

La composition de couche supérieure, comme la ou les composition(s) de couche inférieure de l'invention, comporte généralement au moins un solvant organique. Comme solvant organique utilisable selon l'invention, on peut citer les alcools, les esters, les cétones, le tétrahydropyrane, et leurs mélanges.

Les alcools sont de préférence choisis parmi les alcools inférieurs (en C1-C6), tels que le méthanol, l'éthanol et l'isopropanol.

Les esters sont de préférence choisis parmi les acétates, et on peut citer en particulier l'acétate d'éthyle.

Parmi les cétones, on utilisera de préférence la méthyléthylcétone.

Parmi les solvants appropriés, on peut citer :

méthanol ($CH_3OH$, Carlo Erba),
1-propanol ($CH_3CH_2CH_2OH$, VWR International),
1-méthoxy-2-propanol ($CH_3CH(OH)CH_2OCH_3$, Sigma Aldrich),
4-hydroxy-4-méthyl-2-pentanone $(CH_3)_2C(OH)CH_2COCH_3$, VWR International),
2-méthyl-2-butanol ($(CH_3)_2C(OH)CH_2CH_3$ Sigma Aldrich),
butoxyéthanol ($CH_3(CH_2)_3OCH_2CH_2OH$, Sigma Aldrich),
mélange eau/solvants organiques,

ou tous mélanges de ces solvants contenant au moins un alcool.

Les compositions (HI) et (BI) peuvent aussi inclure d'autres additifs tels que des absorbeurs UV ou des pigments.

Dans le procédé de fabrication d'un article selon l'invention tel que défini précédemment, les compositions de couche inférieure et supérieure selon l'invention peuvent être déposées par toute technique appropriée, par voie liquide connue en soi : dépôt au trempé ("dip coating") ou dépôt par centrifugation ("spin coating") notamment.

Le dépôt au trempé est préféré, le procédé selon l'invention étant particulièrement adapté pour cette technique de dépôt puisqu'il permet de minimiser, voire supprimer les défauts optiques.

Le procédé de l'invention comporte généralement, entre le dépôt de chacune des couches, une étape de séchage et/ou de prédurcissement de la précédente couche avant le dépôt de la couche subséquente.

Dans le cas de la composition de couche supérieure, celle-ci doit avoir diffusé au moins partiellement ou en totalité dans la ou les couche(s) inférieure(s) avant de procéder à son durcissement.

Typiquement le temps de diffusion et comblement est rapide et peut se produire au moins partiellement au cours de l'opération d'application, par trempage ou par centrifugation.

Le prédurcissement est par exemple un séchage à température ambiante, un traitement infrarouge, suivi éventuellement d'un refroidissement par un flux d'air à température ambiante ou un séchage par convection dans une étuve.

Préférentiellement, le prédurcissement est un séchage à température ambiante.

Pour assurer une bonne reproductibilité des antireflets et l'absence de défauts optiques, il est souhaitable d'opérer au cours du dépôt dans des conditions reproductibles.

En particulier, il est recommandé d'opérer dans des conditions d'humidité contrôlées et généralement constantes.

On peut procéder à des taux d'humidité élevés (supérieurs à 55%), des taux correspondant à l'humidité ambiante, ou des taux d'humidité faibles (typiquement de 5 à 40 %).

Préférentiellement, on opère à des taux d'humidité faibles (inférieurs ou égaux à 10%).

Le contrôle des taux d'humidité est connu dans l'état de l'art, par exemple dans les brevets US5856018, US 2005/233113, US 2005/0266208.

Les revêtements antireflets selon l'invention peuvent être déposés sur tout substrat approprié, en verre organique ou minéral, par exemple des lentilles ophtalmiques en verre organique, ces substrats pouvant être nus ou éventuellement revêtus par des revêtements anti-abrasion, antichoc ou autres revêtements classiquement utilisés.

Parmi les substrats en verre organique convenant pour les articles d'optique selon l'invention, on peut citer les substrats en polycarbonate (PC) et ceux obtenus par polymérisation des méthacrylates d'alkyle, en particulier des méthacrylates d'alkyle en $C_1$-$C_4$, tels que le méthyl(méth)acrylate et l'éthyl(méth)acrylate, les (méth)acrylates aromatiques polyéthoxylés tels que les bisphénolates diméthacrylates polyéthoxylés, les dérivés allyliques tels que les allyl carbonates de polyols aliphatiques ou aromatiques, linéaires ou ramifiés, les thio-(méth)acryliques, les substrats en polythiouréthane et en polyépisulfure.

Parmi les substrats recommandés, on peut citer des substrats obtenus par polymérisation des allyl carbonates de polyols parmi lesquels on peut mentionner l'éthylèneglycol bis allyl carbonate, le diéthylène glycol bis 2-méthyl carbonate, le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butylènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bis phénol-A bis (allyl carbonate).

Les substrats particulièrement recommandés sont les substrats obtenus par polymérisation du bis allyl carbonate du diéthylèneglycol, vendus sous la dénomination commerciale CR 39® par la Société PPG INDUSTRIE (lentille ORMA® ESSILOR).

Parmi les substrats également recommandés, on peut citer les substrats obtenus par polymérisation des monomères thio(méth)acryliques, tels que ceux décrits dans la demande de brevet français FR-A-2 734 827.

Bien évidemment, les substrats peuvent être obtenus par polymérisation de mélanges des monomères ci-dessus.

Préférentiellement le substrat a un indice de réfraction de 1,50 à 1,80, de préférence de 1,60 à 1,75.

Selon un autre mode de réalisation de l'invention, l'antireflet est déposé sur un film polymère mince (typiquement 50-200 microns, préférentiellement de 75 à 125 microns).

Ce film revêtu peut ensuite être collé sur la surface d'un substrat tel que décrit précédemment.

On peut utiliser comme couche de primaire antichoc toutes couches de primaire antichoc classiquement utilisées pour les articles en matériau polymère transparent, tels que des lentilles ophtalmiques.

Parmi les compositions de primaire préférées, on peut citer les compositions à base de polyuréthanne thermoplastiques, telles que celles décrites dans les brevets japonais 63-141001 et 63-87223, les compositions de primaires poly(méth)acryliques, telles que celles décrites dans le brevet US-5 015 523, les compositions à base de polyuréthanes thermodurcissables, telles que celles décrites dans le brevet EP-0404111 et les compositions à base de latex poly(méth)acryliques et latex de polyuréthane, telles que celles décrites dans les documents de brevets US 5 316 791, EP-0680492.

Les compositions de primaires préférées sont les compositions à base de polyuréthanne et les compositions à base de latex, en particulier les latex de polyuréthanne.

Les latex poly(méth)acryliques sont des latex de copolymères constitués principalement par un (méth)acrylate, tel que par exemple le (méth)acrylate d'éthyle ou de butyle, ou de méthoxy ou éthoxyéthyle, avec une proportion généralement mineure d'au moins un autre comonomère, tel que par exemple du styrène.

Les latex poly(méth)acryliques préférés sont les latex de copolymères acrylate-styrène.

De tels latex de copolymères acrylate-styrène sont disponibles commercialement auprès de la Société ZENECA RESINS sous la dénomination NEOCRYL®.

Les latex de polyuréthanne sont également connus et disponibles dans le commerce.

A titre d'exemple, on peut citer les latex de polyuréthanne contenant des motifs polyesters. De tels latex sont également commercialisés par la Société ZENECA RESINS sous la dénomination NEOREZ® et par la Société BAXENDEN CHEMICAL sous la dénomination WITCOBOND®.

On peut également utiliser dans les compositions de primaire des mélanges de ces latex, en particulier de latex polyuréthanne et de latex poly(méth)acrylique.

Ces compositions de primaire peuvent être déposées sur les faces de l'article d'optique par trempage ou centrifugation puis séchées à une température d'au moins 70 °C et pouvant aller jusqu'à 100 °C, de préférence de l'ordre de 90 °C, pendant une durée de 2 minutes à 2 heures, généralement de l'ordre de 15 minutes, pour former des couches

de primaire ayant des épaisseurs, après cuisson, de 0,2 à 2,5 μm, de préférence 0,5 à 1,5 μm.

Les revêtements durs anti-abrasion des articles d'optique selon l'invention, et notamment des lentilles ophtalmiques, peuvent être tous revêtements anti-abrasion connus dans le domaine de l'optique ophtalmique.

Parmi les revêtements durs anti-abrasion recommandés dans la présente invention, on peut citer les revêtements obtenus à partir de compositions à base d'hydrolysat de silane, en particulier d'hydrolysat d'époxysilane, par exemple celles décrites dans les brevets EP 0614 957 et US 4 211 823, ou des compositions à base de dérivés (méth)acryliques.

Une composition pour revêtement dur anti-abrasion préférée, comprend un hydrolysat d'époxysilane et de dialkyldialcoxysilane, de la silice colloïdale et une quantité catalytique d'acétylacétonate d'aluminium, le reste étant essentiellement constitué par des solvants classiquement utilisés pour la formulation de telles compositions.

Préférentiellement l'hydrolysat utilisé est un hydrolysat de γ-glycidoxypropyltriméthoxysilane (GLYMO) et de diméthyldiéthoxysilane (DMDES).

Dans un mode de réalisation particulier de l'invention, le substrat sur lequel est déposé le revêtement antireflet de l'invention comprend déjà une couche initiale présentant une porosité.

La ou les couches inférieures et la couche supérieure peuvent être successivement déposées sur cette couche initiale poreuse, la composition de couche supérieure venant combler la porosité de l'ensemble de ces couches, y compris celle de la couche initiale.

Le sol d'oxyde minéral colloïdal métallique formant ladite première couche inférieure est directement déposé sur la couche initiale et le matériau de composition de couche supérieure comble la porosité et ladite couche forme après comblement de sa porosité une couche de moyen indice de réfraction, constituant avec la ou les couches inférieures et la couche supérieure un revêtement antireflet tricouche Moyen indice(MI)/Haut indice(HI)/Bas indice(BI).

Ainsi, l'indice de réfraction et la porosité de la couche initiale sont déterminés de façon à former une couche de moyen indice de réfraction, après comblement de sa porosité, et constituer la première couche d'un empilement antireflet tricouche.

Préférentiellement, la couche initiale est obtenue par dépôt d'un sol comprenant un mélange d'oxydes de bas indice de réfraction (inférieur à 1,52, préférentiellement inférieur à 1,50) et d'oxydes de haut indice (supérieur ou égal à 1,80), afin d'obtenir, après comblement de la porosité initiale de la couche initiale un indice de réfraction dans la gamme de 1,53 à 1,65

Comme indiqué précédemment, les revêtements antireflets des articles d'optique selon l'invention peuvent éventuellement être revêtus de revêtements permettant de modifier leurs propriétés de surface, tels que des revêtements anti-salissures, hydrophobes. Il s'agit généralement de matériaux de type fluorosilanes, de quelques nanomètres d'épaisseur, de préférence 1 à 10 nm, mieux 1 à 5 nm.

Les fluorosilanes utilisés peuvent être les mêmes que les silanes précurseurs (II) de la composition engendrant la couche supérieure de bas indice, mais ils sont utilisés à des teneurs élevées ou purs dans la couche antisalissure.

Lorsque la composition de couche supérieure comprend elle-même un fluorosilane, il n'est généralement pas nécessaire de déposer une couche antisalissure additionnelle, la couche supérieure exerçant cette fonction.

Mais même dans ce cas, il est possible, pour obtenir des performances antisalissure optimales de déposer une couche additionnelle de silanes fluorés très performants tels que l'Optool DSX™.

L'invention peut être utilisée pour préparer des antireflets dans les domaines techniques les plus divers utilisant des antireflets tels que écrans plats, écrans d'ordinateurs, articles d'optique tels que lentilles ophtalmiques, en particulier un verre de lunette.

La suite de la description se réfère aux figures annexées qui représentent, respectivement :

Figure 1, une représentation schématique de l'article revêtu sur lequel on va déposer l'antireflet selon l'invention ;
Figure 2, une représentation schématique d'un article revêtu d'une première couche inférieure selon l'invention ;
Figure 3, une représentation schématique d'un article revêtu d'une couche inférieure et d'une couche supérieure formant un revêtement antireflet bicouche, selon un premier mode de réalisation de l'invention ;
Figure 4, une représentation schématique d'un article revêtu de deux couches inférieures selon l'invention, avant application de la couche supérieure ;
Figure 5, une représentation schématique d'un article revêtu d'un antireflet obtenu selon un deuxième mode de réalisation de l'invention.

Les figures 1 à 3 représentent les différentes étapes de fabrication d'un antireflet selon un premier mode de réalisation de l'invention.

Le dépôt est effectué sur un article 1 représenté en figure 1 comportant un substrat 2 qui peut être en verre organique ou minéral et un revêtement anti-abrasion 3.

On dépose ensuite une fine couche 4 de sol d'un oxyde minéral colloïdal d'indice de réfraction supérieur à 1,80.

Après dépôt et évaporation des solvants, on obtient la couche 4 présentant une porosité 6 entre les particules

5. La dimension et la teneur en particules permettent d'ajuster la porosité souhaitée. Dans la couche 4 de la figure 2, les particules sont représentées non jointives, mais elles peuvent l'être si leur taille ou la concentration de celles-ci sont accrues.

Dans un deuxième temps, on vient déposer une couche supérieure 7 représentée en figure 3, qui va venir combler la porosité 6 de la couche inférieure 4 et l'épaisseur résiduelle de la couche 7 constitue la couche bas indice d'un empilement antireflet bicouche.

Les figures 4 et 5 illustrent un second mode de réalisation de l'invention dans lequel on dépose successivement deux couches inférieures 4bis et 4 ter.

Bien que dans la figure 4, les particules soient représentées de dimensions identiques, elles peuvent avoir des dimensions différentes pour que les porosités des couches inférieures 4bis et 4 ter diffèrent et que la couche 4 ter présente une porosité supérieure à celle de la couche 4 bis.

Les particules de colloïde 5 bis peuvent être et sont généralement d'indice de réfraction plus élevé que les particules 5 ter.

Une fois les couches 4 ter et 4 bis séchées, on applique une solution de couche supérieure 8 dont la quantité est ajustée de façon à pénétrer dans la porosité des deux couches 4 ter et 4 bis.

Dans les deux modes de réalisation de l'invention ci-dessus, la quantité peut être déterminée expérimentalement en déposant une épaisseur donnée de solution de couche supérieure et en mesurant l'épaisseur résiduelle après comblement de la porosité.

On ajuste ensuite la quantité de solution de couche supérieure qu'il convient de déposer pour obtenir l'épaisseur requise, connue, pour obtenir les propriétés AR.

Dans l'exemple qui va suivre, on a utilisé, comme sol de particules minérales colloïdales enrobées dans la composition de couche inférieure, le produit commercialisé sous la dénomination commerciale Optolake 1120Z® (9 RS7 - A15) par la société Catalyst & Chemical.

D'une manière générale, les revêtements antireflet des articles selon l'invention présentent des coefficients de réflexion $R_m$ (moyenne de la réflexion entre 400 et 700 nm) comparables à ceux des revêtements antireflet de l'art antérieur. En effet, les revêtements antireflet selon l'invention présentent généralement une valeur de $R_m$ inférieure à 1,4 % et $R_v$ inférieure à 1,6%, et peuvent atteindre des valeurs de Rv inférieures à 1%.

Les définitions des coefficients de réflexion ($C_R$) à une longueur d'onde donnée et $R_m$ (moyenne de la réflexion entre 400 et 700 nm) sont connus de l'homme de l'art et sont mentionnés dans le document de norme ISO/WD 8980-4.

Le "facteur moyen de réflexion lumineuse", noté $R_v$, est tel que défini dans la norme ISO 13666:1998, et mesuré conformément à la norme ISO 8980-4, c'est-à-dire qu'il s'agit de la moyenne pondérée de la réflexion spectrale sur l'ensemble du spectre visible entre 380 et 780 nm.

Comme déjà indiqué précédemment, les articles d'optique selon l'invention présentent d'excellentes propriétés optiques et sont exempts de défauts cosmétiques visibles à l'oeil nu.

On va maintenant décrire un exemple de réalisation illustrant l'invention de façon plus détaillée mais non limitative.

Pour l'appréciation des propriétés des verres revêtus obtenues dans les exemples, on peut mesurer :

- le coefficient de réflexion ($C_R$) à une longueur d'onde donnée et $R_m$ (moyenne de la réflexion entre 400 et 700 nm) conformément à la norme ISO/WD 8980-4 ;
- le "facteur moyen de réflexion lumineuse," noté $R_v$, est tel que défini dans la norme ISO 13666:1998, et mesuré conformément à la norme ISO 8980-4, c'est-à-dire qu'il s'agit de la moyenne pondérée de la réflexion spectrale sur l'ensemble du spectre visible entre 380 et 780 nm.

Les proportions, pourcentages et quantités mentionnés dans l'exemple sont des proportions, pourcentages et quantités en poids sauf précision contraire.

Dans les exemples qui suivent, les supports sont des lentilles ophtalmiques à base de diallyl carbonate de diéthylèneglycol revêtus d'un primaire antichoc à base de latex W234™ et d'un revêtement anti-abrasion.

<u>Primaire antichoc :</u>

Le primaire antichoc est obtenu à partir d'un latex W234™, dilué de façon à déposer sur le substrat une épaisseur de l'ordre de 1 μm.

<u>Revêtement anti-abrasion :</u>

La composition de revêtement anti-abrasion est préparée en suivant le mode opératoire de l'exemple 3 du brevet EP614957 au nom du déposant, en ajoutant goutte à goutte 42,9 parties d'acide chlorhydrique 0,1 N à une

solution contenant 135,7 parties de y-glycidoxypropyltriéthoxysilane (GLYMO) et 49 parties de diméthyldiéthoxysilane (DMDES). La solution hydrolysée est agitée pendant 24 heures à température ambiante et on ajoute alors 8,8 parties d'acétylacétonate d'aluminium, 26,5 parties d'éthylcellosolve, 400 parties de silice colloïdale MAST (colloïde de particules de silice de 10 à 13 nm de diamètre, à 30 % dans le méthanol et 157 parties de méthanol.

On ajoute alors une petite quantité de tensio-actif. L'extrait sec théorique de la composition renferme de l'ordre de 10 % en matière solide provenant du DMDES hydrolysé.

<u>Exemple 1 :</u>

Dans cet exemple, on réalise un revêtement antireflet bicouche constitué d'une couche inférieure d'épaisseur optique $\lambda/2$ et d'une couche supérieure d'épaisseur optique $\lambda/4$ (épaisseur de la couche supérieure après comblement de la porosité de la couche inférieure).

<u>Solution de couche inférieure :</u>

Cette solution est constituée d'une solution alcoolique (éthanolique) de colloïde 1120 Z 9 RS-7 A15 (particules de $TiO_2$ composite d'indice de réfraction de 2,48) de la société CCIC à 10% en poids de matière sèche.

<u>Solution de couche supérieure :</u>

Il s'agit de la même composition que la composition de revêtement anti-abrasion, dont la dilution est adaptée de façon à atteindre 2,5% d'extrait sec.

L'agent tensio-actif EFKA 3034 est utilisé dans la solution de couche supérieure à une teneur de 0,2% en poids.

<u>Mise en oeuvre</u> :

On dépose une couche inférieure par trempage dans un bain de solution de couche inférieure décrite ci-dessus, le bain étant maintenu à 20°C. (vitesse de remontée de 2 mm/s).

La couche est ensuite séchée à l'air pendant 5 minutes à une température de 25-30°C.

L'épaisseur physique de la couche séchée obtenue est de 140 nm.

Dans un deuxième temps, on dépose sur cette couche inférieure, par trempage (vitesse de remontée de 1,5 mm/s) dans un bain de la solution de couche supérieure, le bain étant maintenu à 7°C, une composition de couche supérieure de 140 nm d'épaisseur physique théorique (Loi de Landau Levich).

Après retrait du bain, l'article comprenant l'empilement constitué des deux couches est soumis à une pré-polymérisation à une température de 75°C, suivie d'une polymérisation de 3h à 100°C.

L'épaisseur physique de la couche supérieure dans l'article final est de 80 nm. (Epaisseur de la couche inférieure : 140 nm).

Les propriétés antireflets, mesurées avec un appareil SMR sont les suivantes :

$$R_m : 0{,}9 \text{ à } 1{,}1\ \%$$

$$R_v : 1{,}3 \text{ à } 1{,}5\ \%$$

Ces valeurs sont des valeurs par face.

Les lentilles obtenues ne présentent aucun défaut d'aspect (identifiable à l'oeil nu.)

<u>Exemple 2 :</u>

L'exemple 1 est reproduit à l'identique, excepté que les épaisseurs sont modifiées.

Sur l'article final obtenu, l'épaisseur de la couche inférieure de l'AR est de 72 nm (avec un indice de réfraction de 1,80) et l'épaisseur de la couche supérieure est de 105 nm (indice de réfraction de la couche est de 1,48).

$$R_v = 0{,}50\ \% \text{ par face.}$$

**Revendications**

1. Procédé de fabrication d'un article d'optique à propriétés antireflets, comprenant :

   a) la formation sur au moins une surface principale (2) d'un support, par application d'un sol d'au moins un oxyde minéral colloïdal d'indice de réfraction supérieur ou égal à 1,80 et éventuellement un liant, d'une première couche inférieure d'au moins un oxyde minéral colloïdal (4) dont l'indice de réfraction est supérieur ou égal à 1,80 et éventuellement de liant, ayant une porosité initiale;
   b) optionnellement, la formation sur la première couche inférieure par application d'un sol d'au moins un oxyde minéral colloïdal d'indice de réfraction inférieur à 1,65 et éventuellement un liant, d'une seconde couche inférieure de porosité initiale au moins égale, de préférence supérieure à la porosité initiale de ladite première couche;
   c) l'application sur la ou les couches inférieures d'une composition de couche supérieure (7) d'un matériau polymérique optiquement transparent comprenant au moins un hydrolysat d'époxyalcoxysilane, ledit matériau polymérique transparent ayant un indice de réfraction inférieur ou égal à 1,50;
   d) le comblement de la porosité de la ou des couches inférieures par pénétration dans la ou les couches inférieures d'au moins une partie du matériau de la composition de couche supérieure (4) formée à l'étape (c) et, éventuellement, en partie par le liant, et la formation d'une couche supérieure durcie dont l'épaisseur est déterminée de sorte que la couche supérieure et la ou les couches inférieures, après comblement de la ou leur porosité initiale, constituent un revêtement antireflet au moins bicouche, conférant à l'article d'optique un coefficient de réflexion par face $R_v \leq 2,5\%$.

2. Procédé selon la revendication 1, **caractérisé en ce que** l'antireflet au moins bicouche forme un empilement d'épaisseur optique $\lambda/2$-$\lambda/4$ ou $\lambda 2$-$3\lambda/4$ pour une longueur d'onde $\lambda$ de 500 à 600 nm.

3. Procédé selon la revendication 1 ou 2, **caractérisé en ce que** ladite première couche inférieure a une épaisseur physique de 100 à 160 nm après comblement de sa porosité initiale.

4. Procédé selon l'une quelconque des revendications 1 à 3, **caractérisé en ce qu'**il ne comprend pas d'étape de formation d'une deuxième couche inférieure et l'antireflet au moins bicouche est formé de ladite première couche inférieure après comblement de sa porosité initiale et de la couche supérieure.

5. Procédé selon la revendication 4, **caractérisé en ce que** la couche supérieure a une épaisseur physique de 70 à 90 nm.

6. Procédé selon la revendication 4, **caractérisé en ce que** la couche supérieure à une épaisseur physique de 250 à 290 nm.

7. Procédé selon l'une quelconque des revendications 1 à 3, **caractérisé en ce qu'**il comprend la mise en oeuvre de l'étape b) et la totalité du matériau de la composition de couche supérieure a pénétré dans la ou les couches inférieures et l'antireflet au moins bicouche est formé par lesdites première et seconde couches après comblement de leur porosité.

8. Procédé selon la revendication 7, **caractérisé en ce que** la seconde couche inférieure, après comblement de sa porosité initiale, a une épaisseur physique de 70 à 90 nm.

9. Procédé selon la revendication 7, **caractérisé en ce que** la seconde couche inférieure, après comblement de sa porosité initiale, a une épaisseur physique de 250 à 290 nm.

10. Procédé selon l'une quelconque des revendications précédentes, **caractérisé en ce que** la première couche inférieure possède, après comblement de sa porosité initiale, un indice de réfraction élevé d'au moins 1,70, de préférence d'au moins 1,75.

11. Procédé selon l'une quelconque des revendications 1 à 10 , **caractérisé en ce que** la porosité initiale de la première ou deuxième couche, en l'absence de liant, est d'au moins 40 % en volume, de préférence d'au moins 50 % en volume.

12. Procédé selon l'une quelconque des revendications 1 à 11, caractérisé en que la taille des particules du ou des oxydes minéraux colloïdaux est de 5 à 80 nm, de préférence 10 à 30 nm.

**13.** Procédé selon l'une quelconque des revendications 1 à 12, **caractérisé en ce qu'**aucune des première et deuxième couches inférieures ne renferme de liant.

**14.** Procédé selon l'une quelconque des revendications 1 à 3 et 7 à 13, **caractérisé en ce qu'**il comprend la formation sur la première couche inférieure, par application d'un sol d'au moins un oxyde minéral colloïdal d'indice de réfraction inférieur à 1,65 et éventuellement un liant, d'une seconde couche inférieure de porosité initiale au moins égale à la porosité initiale de ladite première couche, ladite deuxième couche inférieure comprenant au moins un oxyde minéral colloïdal de bas indice de réfraction ($n_D^{25} \leq 1{,}50$).

**15.** Procédé selon l'une quelconque des revendications 1 à 14, caractérisé en que ledit époxyalcoxysilane comporte un groupement époxy, et trois groupements alcoxy directement liés à l'atome de silicium.

**16.** Procédé selon l'une quelconque des revendications précédentes, **caractérisé en ce que** le support est revêtu d' une couche initiale présentant une porosité initiale et une épaisseur initiale sur laquelle est directement déposé le sol d'oxyde minéral colloïdal métallique formant ladite première couche inférieure et le matériau de composition de couche supérieure comble la porosité de la couche initiale et ladite couche forme, après comblement de sa porosité, une couche de moyen indice de réfraction, constituant avec la ou les couches inférieures et la couche supérieure un antireflet tricouche MI/HI/BI.

**17.** Procédé selon l'une quelconque des revendications précédentes, **caractérisé en ce que** la composition de couche supérieure comprend en outre un fluorosilane précurseur comprenant de préférence au moins deux groupes hydrolysables par molécule.

**18.** Article d'optique, **caractérisé en ce qu'**il comprend sur au moins une de ses surfaces principales un revêtement antireflet obtenu selon le procédé de l'une quelconque des revendications précédentes.

**19.** Article d'optique selon la revendication 18, caractérisé en que l'article est une lentille ophtalmique, en particulier un verre de lunette.

## Patentansprüche

**1.** Verfahren zur Herstellung eines optischen Gegenstandes mit Entspiegelungseigenschaften, umfassend:

a) die Herstellung auf mindestens einer Hauptoberfläche (2) eines Trägers, durch Aufbringen eines Sols mindestens eines kolloidalen anorganischen Oxids mit einem Brechungsindex von mehr als oder gleich 1,80 und gegebenenfalls eines Bindemittels, einer ersten unteren Schicht aus mindestens einem kolloidalen anorganischen Oxid (4), deren Brechungsindex größer als oder gleich 1,80 ist, und gegebenenfalls Bindemittel, die eine Ausgangs-Porosität hat;
b) gegebenenfalls die Herstellung auf der ersten unteren Schicht, durch Aufbringen eines Sols mindestens eines kolloidalen anorganischen Oxids mit einem Brechungsindex von weniger als 1,65 und gegebenenfalls eines Bindemittels, einer zweiten unteren Schicht mit einer Ausgangs-Porosität, die mindestens gleich, vorzugsweise größer ist als die Ausgangs-Porosität der ersten Schicht;
c) Aufbringen auf die untere Schicht oder Schichten einer Zusammensetzung für die obere Schicht (7) aus einem optisch transparenten polymeren Material, umfassend mindestens ein Epoxyalkoxysilan-Hydrolysat, wobei das transparente polymere Material einen Brechungsindex von weniger als oder gleich 1,50 hat;
d) das Auffüllen der Porosität der unteren Schicht oder Schichten, indem man in die untere(n) Schicht oder Schichten mindestens einen Teil des Materials der in Schritt (c) hergestellten Zusammensetzung für die obere Schicht (7) und gegebenenfalls zum Teil das Bindemittel eindringen lässt, und die Herstellung einer gehärteten oberen Schicht, deren Dicke so bestimmt wird, dass die obere Schicht und die untere(n) Schicht oder Schichten nach dem Auffüllen ihrer Ausgangs-Porosität eine mindestens zweischichtige Entspiegelungsbeschichtung bilden, die dem optischen Gegenstand einen Reflexionskoeffizienten pro Fläche von $R_v \leq 2{,}5\%$ verleiht.

**2.** Verfahren nach Anspruch 1, **dadurch gekennzeichnet, dass** die mindestens zweischichtige Entspiegelung einen Stapel mit einer optischen Dicke $\lambda/2$-$\lambda/4$ oder $\lambda/2$-$3\lambda/4$ bei einer Wellenlänge $\lambda$ von 500 bis 600 nm bilden.

**3.** Verfahren nach Anspruch 1 oder 2, **dadurch gekennzeichnet, dass** erste untere Schicht eine physikalische Dicke

von 100 bis 160 nm nach dem Auffüllen ihrer Ausgangs-Porosität hat.

4. Verfahren nach einem der Ansprüche 1 bis 3, **dadurch gekennzeichnet, dass** es keinen Schritt der Herstellung einer zweiten unteren Schicht umfasst und die mindestens zweischichtige Entspiegelung aus der ersten unteren Schicht nach dem Auffüllen ihrer Ausgangs-Porosität und der oberen Schicht hergestellt wird.

5. Verfahren nach Anspruch 4, **dadurch gekennzeichnet, dass** die obere Schicht eine physikalische Dicke von 70 bis 90 nm besitzt.

6. Verfahren nach Anspruch 4, **dadurch gekennzeichnet, dass** die obere Schicht eine physikalische Dicke von 250 bis 290 nm besitzt.

7. Verfahren nach einem der Ansprüche 1 bis 3, **dadurch gekennzeichnet, dass** es die Durchführung des Schritts b) umfasst und die Gesamtheit des Materials der Zusammensetzung für die obere Schicht in die untere(n) Schicht oder Schichten eingedrungen ist und die mindestens zweischichtige Entspiegelung durch diese ersten und zweiten Schichten nach dem Auffüllen ihrer Porosität gebildet wird.

8. Verfahren nach Anspruch 7, **dadurch gekennzeichnet, dass** die zweite untere Schicht nach dem Auffüllen ihrer Ausgangs-Porosität eine physikalische Dicke von 70 bis 90 nm besitzt.

9. Verfahren nach Anspruch 7, **dadurch gekennzeichnet, dass** die zweite untere Schicht nach dem Auffüllen ihrer Ausgangs-Porosität eine physikalische Dicke von 250 bis 290 nm besitzt.

10. Verfahren nach einem der vorhergehenden Ansprüche, **dadurch gekennzeichnet, dass** die erste untere Schicht nach dem Auffüllen ihrer Ausgangs-Porosität einen erhöhten Brechungsindex von mindestens 1,70, vorzugsweise mindestens 1,75, besitzt.

11. Verfahren nach einem der Ansprüche 1 bis 10, **dadurch gekennzeichnet, dass** die Ausgangs-Porosität der ersten oder zweiten Schicht in Abwesenheit von Bindemittel mindestens 40 Volumen-%, vorzugsweise mindestens 50 Volumen-%, beträgt.

12. Verfahren nach einem der Ansprüche 1 bis 11, **dadurch gekennzeichnet, dass** die Größe der Partikel des oder der kolloidalen anorganischen Oxid(s/e) 5 bis 80 nm, vorzugsweise 10 bis 30 nm, beträgt.

13. Verfahren nach einem der Ansprüche 1 bis 12, **dadurch gekennzeichnet, dass** keine der ersten und zweiten unteren Schichten ein Bindemittel enthält.

14. Verfahren nach einem der Ansprüche 1 bis 3 und 7 bis 13, **dadurch gekennzeichnet, dass** es die Herstellung auf der ersten unteren Schicht, durch Aufbringen eines Sols mindestens eines kolloidalen anorganischen Oxids mit einem Brechungsindex unter 1,65 und gegebenenfalls eines Bindemittels, einer zweiten unteren Schicht mit einer Ausgangs-Porosität, die mindestens gleich der Ausgangs-Porosität der ersten Schicht ist, umfasst, wobei die zweite untere Schicht mindestens ein kolloidales anorganisches Oxid mit kleinem Brechungsindex ($n^{25}_D \leq 1{,}50$) umfasst.

15. Verfahren nach einem der Ansprüche 1 bis 14, **dadurch gekennzeichnet, dass** das Epoxyalkoxysilan eine Epoxygruppe und drei Alkoxygruppen trägt, die direkt an das Siliziumatom gebunden sind.

16. Verfahren nach einem der vorhergehenden Ansprüche, **dadurch gekennzeichnet, dass** der Träger mit einer Ausgangsschicht beschichtet ist, die eine Ausgangs-Porosität und eine Ausgangsdicke aufweist, auf die direkt das Sol des kolloidalen anorganischen Metalloxids, das die erste untere Schicht bildet, aufgebracht wird, und das Material der Zusammensetzung für die obere Schicht die Porosität der Ausgangsschicht auffüllt und diese Schicht nach dem Auffüllen ihrer Porosität eine Schicht mit mittlerem Brechungsindex bildet, die mit der oder den unteren Schicht (en) und der oberen Schicht eine dreischichtige MI/HI/BI-Entspiegelung bildet.

17. Verfahren nach einem der vorhergehenden Ansprüche, **dadurch gekennzeichnet, dass** die Zusammensetzung für die obere Schicht außerdem eine Fluorsilan-Vorstufe umfasst, die vorzugsweise mindestens zwei hydrolysierbare Gruppen pro Molekül umfasst.

18. Optischer Gegenstand, **dadurch gekennzeichnet, dass** er auf mindestens einer seiner Hauptflächen eine Entspiegelungsbeschichtung umfasst, die gemäß dem Verfahren nach einem der vorhergehenden Ansprüche erhalten wird.

**19.** Optischer Gegenstand nach Anspruch 18, **dadurch gekennzeichnet, dass** der Gegenstand eine ophthalmische Linse, insbesondere ein Brillenglas, ist.

## Claims

**1.** A method for manufacturing an optical article with anti-reflection properties, comprising:

a) forming on at least one main surface (2) of a support, by applying a sol comprising at least one colloidal mineral oxide with a refractive index higher than or equal to 1.80 and optionally a binder, a first lower layer comprising at least one colloidal mineral oxide (4) with a refractive index higher than or equal to 1.80 and optionally a binder, having an initial porosity;
b) optionally, forming a second lower layer having an initial porosity at least equal to, preferably higher than the initial porosity of said first layer, on the first lower layer by applying a sol comprising at least one colloidal mineral oxide with a refractive index lower than 1.65 and optionally a binder;
c) applying onto the one or more lower layer(s) an upper layer composition (7) of an optically transparent polymer material comprising at least one epoxyalkoxysilane hydrolyzate, said transparent polymer material having a refractive index lower than or equal to 1.50;
d) filling the porosity of the one or more lower layer(s) through penetration into the one or more lower layer(s) of at least part of the material of the upper layer composition (7) formed at step (c) and, optionally, part of the binder, and forming a cured upper layer which thickness is determined so that the upper layer and the one or more lower layer(s), once the initial porosity thereof has been filled, form an at least bilayered anti-reflection coating, providing the optical article with a reflection factor per face $R_v \leq 2.5$ %.

**2.** A method according to claim 1, wherein the at least bilayered anti-reflection coating forms a stack having an optical thickness of $\lambda/2$-$\lambda/4$ or $\lambda/2$-$3\lambda/4$ for a wavelength $\lambda$ ranging from 500 to 600 nm.

**3.** A method according to claim 1 or 2, wherein said first lower layer, once its initial porosity has been filled, has a physical thickness ranging from 100 to 160 nm.

**4.** A method according to any one of claims 1 to 3, which does not comprise any step of forming a second lower layer, wherein the at least bilayered anti-reflection coating is comprising said first lower layer once its initial porosity has been filled and of the upper layer.

**5.** A method according to claim 4, wherein the upper layer has a physical thickness ranging from 70 to 90 nm.

**6.** A method according to claim 4, wherein the upper layer has a physical thickness ranging from 250 to 290 nm.

**7.** A method according to any one of claims 1 to 3, which comprises the implementation of step b) and wherein the whole material of the upper layer composition has penetrated into the one or more lower layer(s) and the at least bilayered anti-reflection coating is formed with said first and second layers once their pores have been filled.

**8.** A method according to claim 7, wherein the second lower layer, once its initial porosity has been filled, has a physical thickness ranging from 70 to 90 nm.

**9.** A method according to claim 7, wherein the second lower layer, once its initial porosity has been filled, has a physical thickness ranging from 250 to 290 nm.

**10.** A method according to any one of the preceding claims, wherein the first lower layer, once its initial porosity has been filled, has a high refractive index of at least 1.70, preferably of at least 1.75.

**11.** A method according to any one of claims 1 to 10, wherein the initial porosity of the first or the second layer, in the absence of any binder, is of at least 40% by volume, preferably at least 50% by volume.

**12.** A method according to any one of claims 1 to 11, wherein the particle size of the one or more colloid mineral oxide(s)

does range from 5 to 80 nm, preferably from 10 to 30 nm.

**13.** A method according to any one of claims 1 to 12, wherein none of the first and second lower layers contains a binder.

**14.** A method according to any one of claims 1 to 3 and 7 to 13, which comprises the step of forming on the first lower layer, by applying a sol comprising at least one colloidal mineral oxide with a refractive index lower than 1.65 and optionally a binder, a second lower layer having an initial porosity at least equal to the initial porosity of said first layer, said second lower layer comprising at least one low refractive index colloidal mineral oxide ($n_D^{25}$ ≤ 1.50).

**15.** A method according to any one of claims 1 to 14, wherein said epoxyalkoxysilane has one epoxy group and three alkoxy groups directly linked to the silicon atom.

**16.** A method according to any one of the preceding claims, wherein the support is coated with an initial layer having an initial porosity and an initial thickness, onto which the colloidal mineral metal oxide sol forming said first lower layer is directly deposited, and the material of the upper layer composition fills the porosity of the initial layer whereby said layer forms, once the porosity thereof has been filled, a layer with an intermediate refractive index, forming with the one or more lower layer(s) and the upper layer a trilayered MI/HI/LI anti-reflection coating.

**17.** A method according to any one of the preceding claims, wherein the upper layer composition further comprises a precursor fluorosilane having preferably at least two hydrolyzable groups per molecule.

**18.** An optical article, which comprises on at least one of the main surfaces thereof an anti-reflection coating obtained through the method according to any one of the preceding claims.

**19.** An optical article according to claim 18, wherein the article is an ophthalmic lens, especially for eyeglasses.

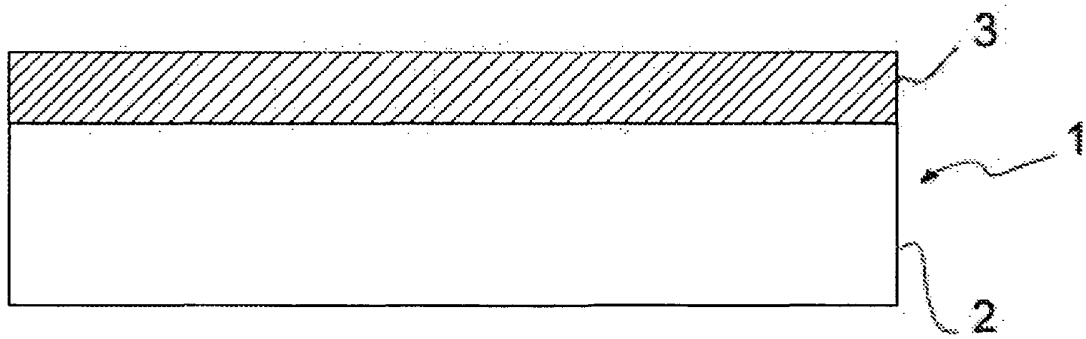


Figure 1

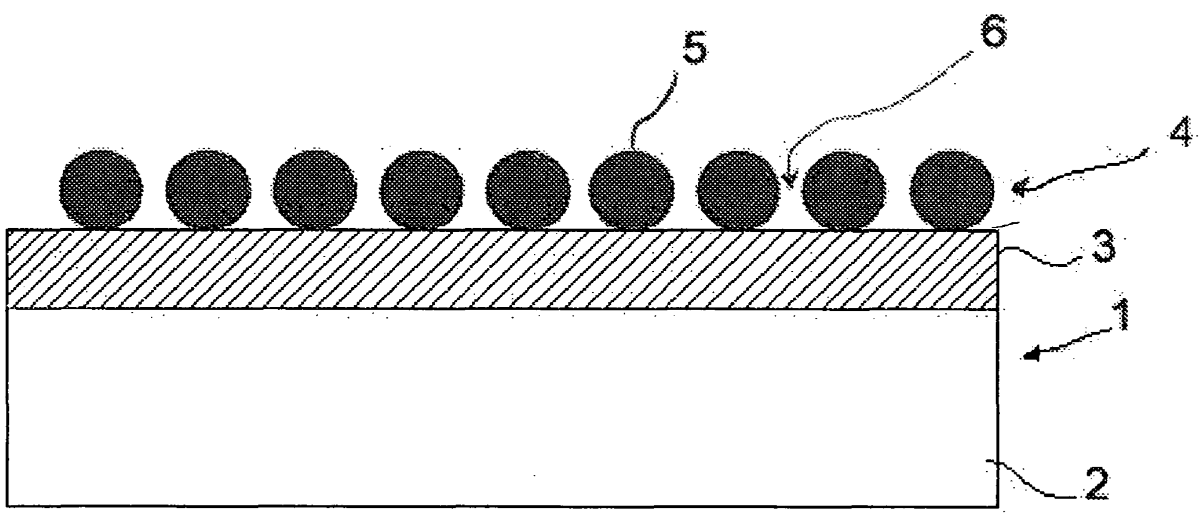


Figure 2

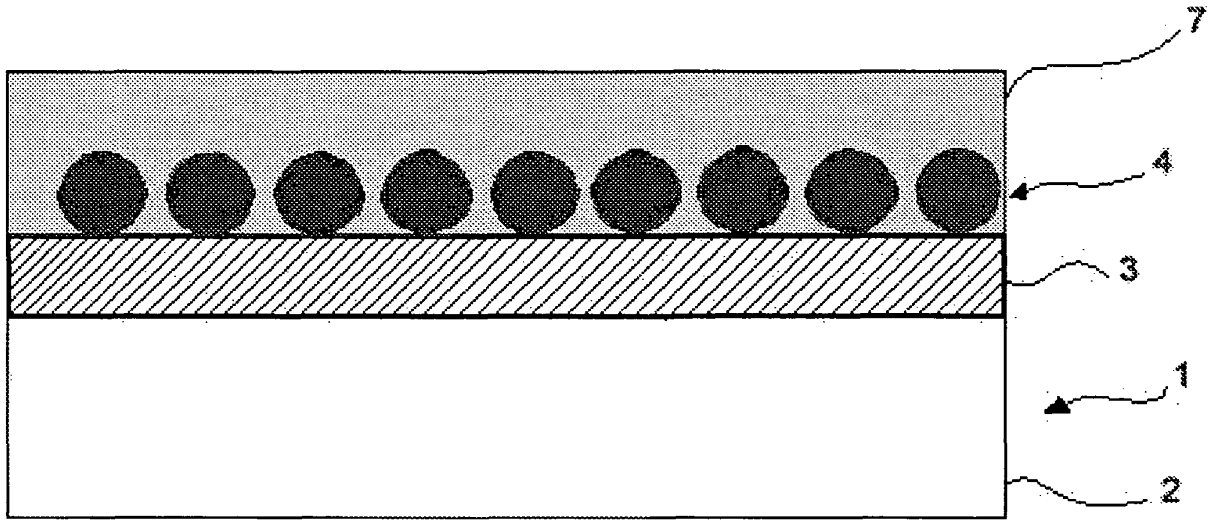


Figure 3

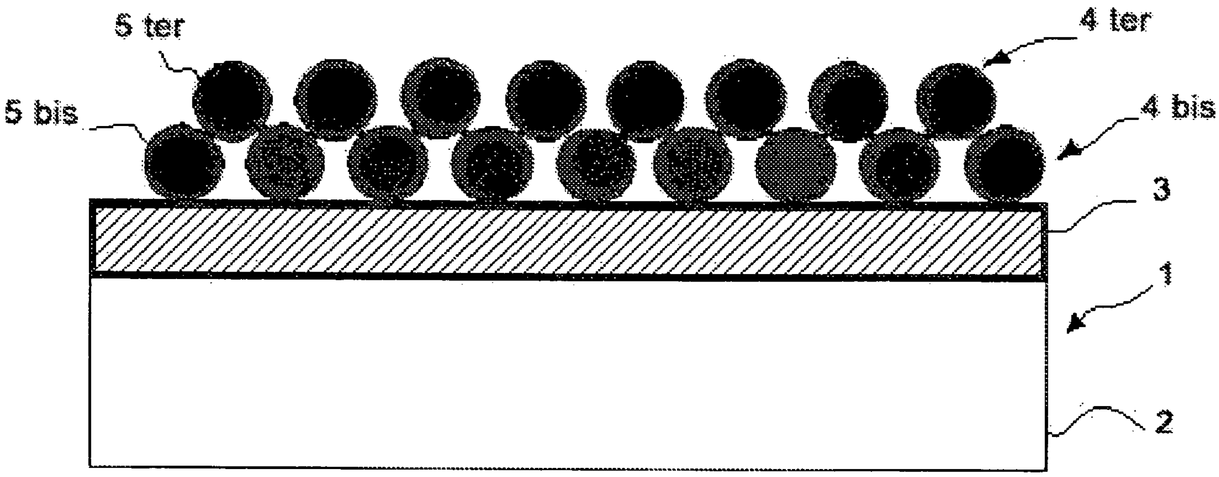


Figure 4

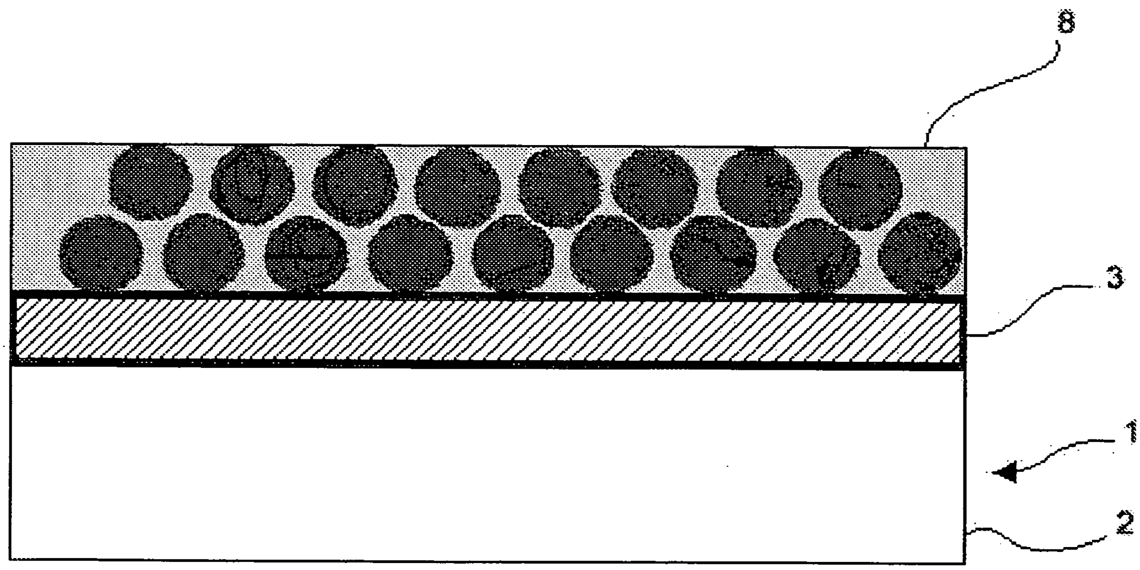


Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5104692 A
- US 4590117 A
- WO 2006095469 A
- WO 03056366 A
- WO 119533 A1
- JP 2005234311 B
- JP 2001233611 A
- US 4211823 A
- US 5081192 A
- US 5763061 A
- US 6183872 B
- US 5739639 A
- US 5922787 A
- US 6337235 B
- US 6277485 B
- EP 933377 A
- EP 614957 A
- US 5856018 A
- US 2005233113 A
- US 20050266208 A
- FR 2734827 A
- JP 63141001 A
- JP 63087223 A
- US 5015523 A
- EP 0404111 A
- US 5316791 A
- EP 0680492 A
- EP 0614957 A